# EUROPEAN PATENT APPLICATION

(11) **EP 1 849 625 A1**
(43) Date of publication of application: **31.10.2007**
(21) Application number: 06711854.7
(22) Date of filing: 18.01.2006
(51) Int. Cl.: B60C 5/00, B29D 30/60, B60C 11/00

(54) **PNEUMATIC TIRE, ARRANGEMENT STRUCTURE OF THE TIRE, AND METHOD OF MANUFACTURING THE TIRE**

(30) Priority: 14.02.2005 JP 2005035580
(71) Applicant: Bridgestone Corporation, Tokyo 104-8340 (JP)
(72) Inventor: Matsumoto, Masayuki, Bridgestone Corp. Tech., Kodaira-shi, Tokyo 1878531 (JP)
(74) Representative: Whalley, Kevin
(86) International application number: PCT/JP2006/300585
(87) International publication number: WO 2006/085432

(57) **Abstract**

High-speed durability of a pneumatic tire is maintained and abrasion is improved by making a cornering force hardly affecting on the tire. A tread is formed by winding narrow-width ribbon-like rubber members (1) in a range of the gauge from 0.5 to 2 mm and the width of 5 to 15 mm in spirals by continuous repetition of partially overlapped winding, the traveling direction of the helical winding is made to accord with a direction from the inside to the outside when mounted on a vehicle, and the direction of the cornering force received at running becomes a direction to slick down on an exposed surface of the laminated ribbon-like rubber members (1) in mounting of this pneumatic tire (T).

## Description

### Technical Field

The present invention relates to a pneumatic tire and particularly to a pneumatic tire, arrangement structure and manufacturing method of the tire that can maintain high-speed durability and improve abrasion mainly in a high-performance radial tire.

### Background Art

In a recent trend of unattended molding, reduction in plant space in a tire manufacturing method, or for expansion of utilization of tread divided in the width direction, a molding technology of a tread by continuous repetition of partial overlapped winding of a strip-like member has been developed, in contrast with the conventional extrusion method.
In this molding method, when a ribbon is wound and molded in spirals, in the case when a ribbon-like rubber member, which is an elastic rubber member, is abutted, wound and molded, it is practically difficult to wind it under control precisely, without a clearance being left between the ribbons, and productivity is also impaired. Moreover, even if a slight clearance should remain, it can cause air intrusion. Therefore, lamination with step-like formation is required.

Thus, a rubber strip is laminated and wound in spirals on a rubber base portion formed separately so as to manufacture a tire. For example, a ring-like base portion is formed on a former capable of expansion and contraction from an extruded rubber product, and a rubber strip made of a band-like unvulcanized rubber composition with narrow width and small thickness is wound on the base portion. That is, it is known that the starting point of winding is fixed to one end in the axial direction of the base portion, the former is rotated in a predetermined direction, and the rubber strip is moved in the axial direction toward the other end so that the rubber strip is wound in the circumferential direction and in spirals on the outer circumferential face of the base portion and by appropriately adjusting the axial moving speed or the pitch, a lamination portion forming a finished section of a tread rubber is formed (See Patent Document 1).

In this conventional tire, the rubber strip (ribbon-like rubber member) is continuously wound in laminae from one end to the other in the axial direction so as to form a tire, but Patent Document 1 describes that the strip is wound from one end to the other in the axial direction, from the center to the other in the axial direction, and from the outside to the center in the axial direction of the base portion (See the paragraph **[0021]),** and as obvious from this description, the laminating direction of the strip may vary and technical significance of the laminating direction is not particularly considered.

In a pneumatic tire, particularly in a tire used at a high speed represented by a high-performance tire, when a rubber strip is laminated from the outside to the inside of a tire, at an input of a large cornering force during high-speed running, an overlapped winding portion in the narrow-width ribbon member is turned up by the cornering force, that is, a crack generated at the interface as a core develops and deteriorates abrasion resistance, which is a problem. However, the invention described in Patent Document 1 does not provide a solution to this problem.
Patent Document 1: Japanese Patent Laid-Open No. 2000-94542

### Disclosure of the Invention

### Problem to be Solved by the Invention

The present invention was made in order to solve the above problem of a conventional pneumatic tire, and its first object is to maintain high-speed durability and to improve abrasion particularly in a high-performance radial tire, and more specifically, in a tire provided with a tread formed by lamination of a ribbon-like rubber member, an overlapped winding portion of a laminated narrow-width ribbon-like rubber member is not turned up even upon an input of a large cornering force and a crack is not generated, and thus, a pneumatic tire in which abrasion resistance is not impaired is provided.
A second object is to improve steering stability by making tire abrasion uniform.

### Means for Solving the Problem

An invention in claim 1 is a pneumatic tire provided with a tread formed by winding ribbon-like rubber members in a tire circumferential direction in spirals so that the member is partially overlapped in a tire width direction, characterized in that the ribbon-like rubber members are wound in spirals, when being mounted on a vehicle, from a portion corresponding to the inside thereof toward a portion corresponding to the outside thereof.
An invention according to claim 2 is characterized in that in a pneumatic tire described in claim 1, the ribbon-like rubber member has a thickness of 0.5 mm to 2 mm and a width of 5 mm to 15 mm.
An invention according to claim 3 is characterized in that in the pneumatic tire described in claim 1 or 2, an end in the width direction of the ribbon-like rubber member has a thickness smaller than the center part.
An invention according to claim 4 is characterized in that in the pneumatic tire described in claim 3, the end in the width direction is cut away at a corner part of a tread surface.
An invention according to claim 5 is an arrangement structure of a pneumatic tire provided with a tread formed by winding ribbon-like rubber members in a tire circumferential direction in spirals so as to be partially overlapped in a width direction, characterized in that tires are mounted on a vehicle so that spiral winding of the ribbon-like rubber members is directed from the inside toward the outside when being mounted.
An invention according to claim 6 is a manufacturing method of a pneumatic tire, including a lamination molding process for winding ribbon-like rubber members in a tire circumferential direction in spirals so as to be partially overlapped in a tire width direction, and a process of stitching the ribbon-like rubber members partially overlapped in winding in a direction opposite to the lamination-molding direction of the ribbon members after lamination of the ribbon-like rubber members. Performance

By laminating/helical winding a ribbon-like rubber member constituting a tire tread in conformity with a direction from the inside toward the outside of a vehicle and mounting a tire on a vehicle with its laminating direction in conformity with that direction, from whichever direction of right or left a large cornering force acts at high-speed running, the direction of the force becomes a direction to slick down an exposed surface of the ribbon-like rubber member laminated and wound in spirals all the time for the outer side of the wheel at turning, and the ribbon-like rubber member is not turned up from the lamination. Also, by removing a corner part of the sectional shape of the laminated ribbon-like rubber member so that the corner part does not exist on the exposed surface side, a step between the laminated ribbon-like rubber members at winding can be reduced, a tread surface can be made smooth and abrasion develops uniformly.
Moreover, since the laminating direction of the ribbon-like rubber member is arranged in one direction, by stitching in a direction opposite to the laminating direction, the stitching can be carried out while the exposed surface of the laminated ribbon-like rubber member is slicked down.

### Effects of the Invention

According to the present invention, even if a cornering force at high-speed cornering acts either from the right or left direction, the direction of the force becomes a direction to slick down the exposed surface of each ribbon-like rubber member wound in laminae and spirals for the outer wheel side in turning. And thus, high-speed durability of the tire can be maintained and its abrasion can be improved. Also, since an exposed corner part of the ribbon-like rubber constituting a tread has been removed, abrasion is made uniform, and steering stability is improved. Also, winding defect or the like in manufacturing can be alleviated since steps are smoothened by stitching.

### Brief Description of the Drawings

Fig. 1 is a perspective view schematically showing an example of a tread molding machine for a tire.
Figs. 2 are sectional views of an essential part of a pneumatic tire schematically illustrating a laminated winding direction of a ribbon-like rubber member, in which Fig. 2A shows a pneumatic tire according to an embodiment of the present invention and Fig. 2B is a conventional pneumatic tire.
Fig. 3 is a sectional view of an essential part for explaining a stitching direction of a laminated ribbon-like rubber member.
Fig. 4 is a plan view illustrating arrangement at mounting of a pneumatic tire.
Figs. 5 are views showing a sectional shape of the ribbon-like rubber member, in which Fig. 5A shows an embodiment of the present invention and fig. 5B for a conventional one.

### Description of the Reference Symbols

1: Ribbon-like rubber member
2: Tire-constituting member
10: Tread-molding device
11: Base
12: Rotating shaft
13: Toroidal core
15: Extruder
16: Controller
17: Computer
T: Pneumatic tire

### Best Modes for Carrying Out the Invention

A pneumatic tire according to an embodiment of the present invention will be described referring to the attached drawings.
First, the principle of the present invention will be described. In general, an input direction of a cornering force to a tire is different in right-turning and left-turning. At the left-turning, for example, the input to a tire is larger on the right wheel, which is an outer wheel at turning, than the left wheel, and the input direction to the right-wheel tire at that time is the left direction faced to the turning center. In the right-turning, on the contrary, the input to the left wheel is increased, and the input direction to the left wheel is in the right-hand direction faced to the turning center at this time. That is, regardless of the right or left wheel, a force of the turning center mainly, that is, in the direction of a car body seen from the tire is inputted at turning. Thus, when a tread is molded by helical winding, by laminating a ribbon-like rubber member from the inside to the outside when being mounted on a vehicle, the lamination is stacked in the slicked-down direction on the ribbon-like laminated surface with respect to the input to the tire. By this arrangement, turning-up of the ribbon at a high speed and large input or occurrence of a crack starting at the interface can be restrained.

In the present invention, when a ribbon-like rubber member is supplied onto a tire-constituting member made of an inner liner, a carcass ply, a belt and the like and wound in spirals while partially overlapping so as to form a tire tread portion, the ribbon is laminated so that the laminating direction travels from the inside to the outside when being mounted on a vehicle.

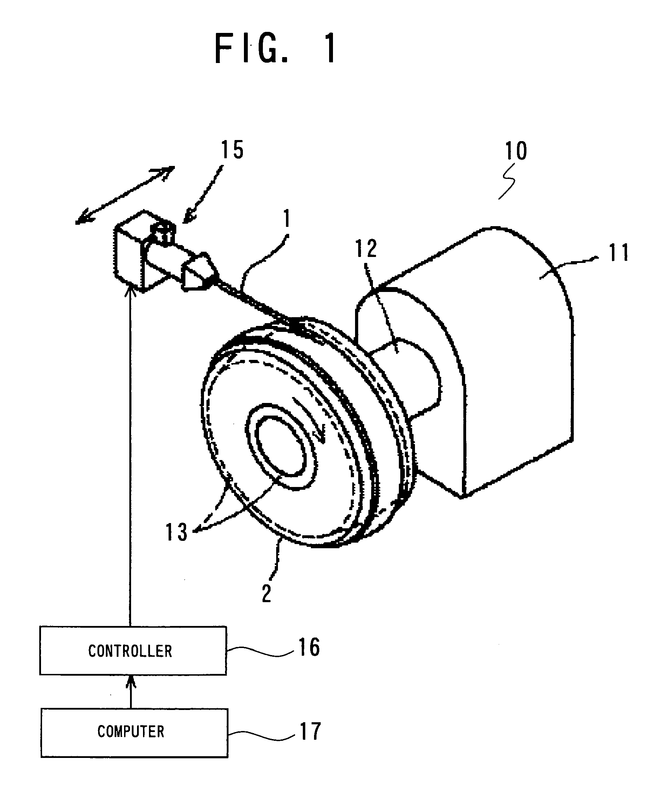

Fig. 1 is a perspective view schematically showing an example of a conventional tread-molding device 10 for manufacturing a pneumatic tire according to an embodiment of the present invention.
The tread-molding device 10 includes a base 11 provided with a motor, a toroidal core 13 to be a support body of a tire-constituting member 2 integrally provided at a rotating shaft 12 projected from the base 11, and an extruder 15 arranged adjacent to the toroidal core 13.
The extruder 15 molds and extrudes inputted rubber material in a ribbon -like from a spout by rotation of a screw and supplies a ribbon-like rubber 1 onto the toroidal core 13. Also, the extruder 15 is movable in the direction of the rotation center shaft of the toroidal core 13 as well as movable at a right angle to the direction of the rotation center shaft, and also it is configured to be able to change the direction of extrusion of the rubber material and to move along the slightly curved outer circumferential face of the toroidal core 13. This extruder 15 is driven by a controller 16 controlled by a control signal from a computer 17.

The tire-constituting member 2 is arranged on the toroidal core 13, and the ribbon-like rubber 1 is supplied onto the tire-constituting member 2 from the extruder 15.
Here, the toroidal core 13 is rotated with the tire-constituting member 2 at a predetermined number of rotations, and the extruder 15 is controlled to be driven by the controller 16 so as to supply the ribbon-like rubber 1 onto the tire-constituting member 2 while moving mainly in the direction of the rotating shaft. At this time, the ribbon-like rubber 1 is partially overlapped and wound in spirals while the overlapping degree is adjusted by controlling the moving speed of the extruder 15 in the rotation shaft direction with respect to the rotating speed of the toroidal core 13 so that a cylindrical tread 3 is formed on the tire-constituting member 2.

The computer 17 determines a laminating pattern for obtaining a required tread sectional shape in advance based on the capability of the extruder 15 and executes control so that the ribbon-like rubber 1 is wound according to this laminating pattern.

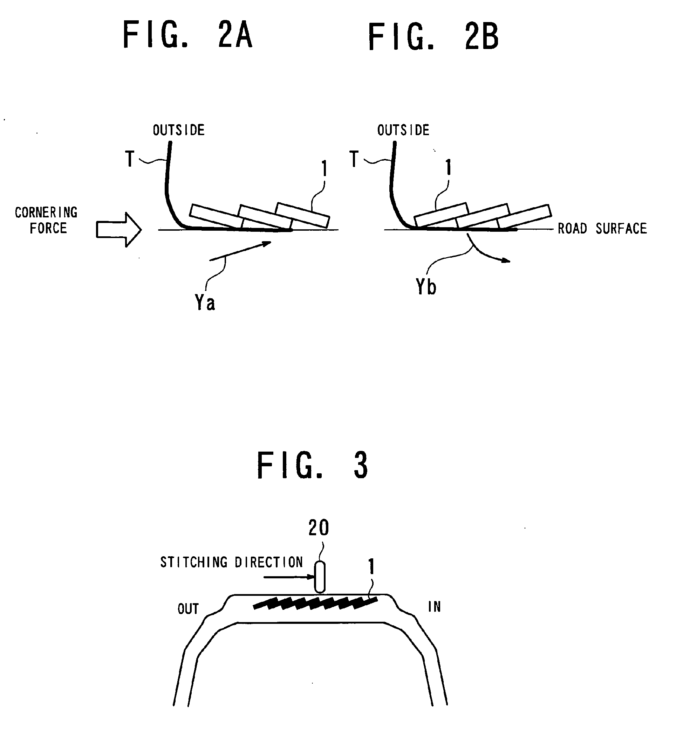

Fig. 2A is an enlarged sectional view of an essential part of a tire having a tread formed by the ribbon-like rubber member 1 wound on the tire-constituting member 2 as above. Fig. 2B is a similar view of a conventional tire shown for comparison.
In the pneumatic tire according to this embodiment, the ribbon-like rubber member is wound in spirals from a portion corresponding to the inside to a portion corresponding to the outside when being mounted on a vehicle by helically winding in the tire circumferential direction so that the member is partially overlapped in the tire width direction. That is, the first ribbon-like rubber member is wound on the second ribbon-like rubber member so that the left-hand side portion of the second ribbon-like rubber member 1 comes under and overlaps with the right-hand side portion of the ribbon-like rubber member on the OUT (outermost) side in the laminated winding direction of the ribbon-like rubber member, and the adjacent ribbon-like rubber members 1 are wound, laminated and molded with the similar relation with each other.
This configuration can be obtained by winding the ribbon-like rubber member 1 on the tire-constituting member 2 from the side opposite to the OUT side, that is, from the IN (inner) side so that a part of the member is overlapped in the tread-molding device 10 shown in Fig. 1.

By winding the ribbon-like rubber member 1 in this way, when a cornering force is received from a direction shown by an arrow, for example, the force acts in a direction of Ya to slick down the exposed surface of each ribbon-like rubber member 1 as shown in Fig. 2A, and there is no problem such as turning-up of the laminated surface of each ribbon-like rubber member 1 in a direction of Yb or occurrence of a crack starting at the interface as in a conventional pneumatic tire whose laminated winding of the ribbon-like rubber member 1 shown in Fig. 2B is opposite to the present invention.

Fig. 3 shows a process of moving a stitching roll 20 in a direction opposite to the above winding direction (laminating direction), that is, from the left end to the right in the figure over the laminated ribbon-like rubber member so as to press and surely stick the ribbon-like rubber members 1 each other wound in spirals and to expel remaining air between the ribbon-like rubber members.

In this process, after the ribbon-like rubber member 1 is wound on the toroidal core 13, stitching is carried out using the stitching roll 20. At this time, the direction of the stitching is set opposite to the direction to helically wind the ribbon at lamination, that is, the direction shown in the figure. This direction is to smoothen steps on the tire surface, and the stitching in this direction can restrict winding defect in manufacture.

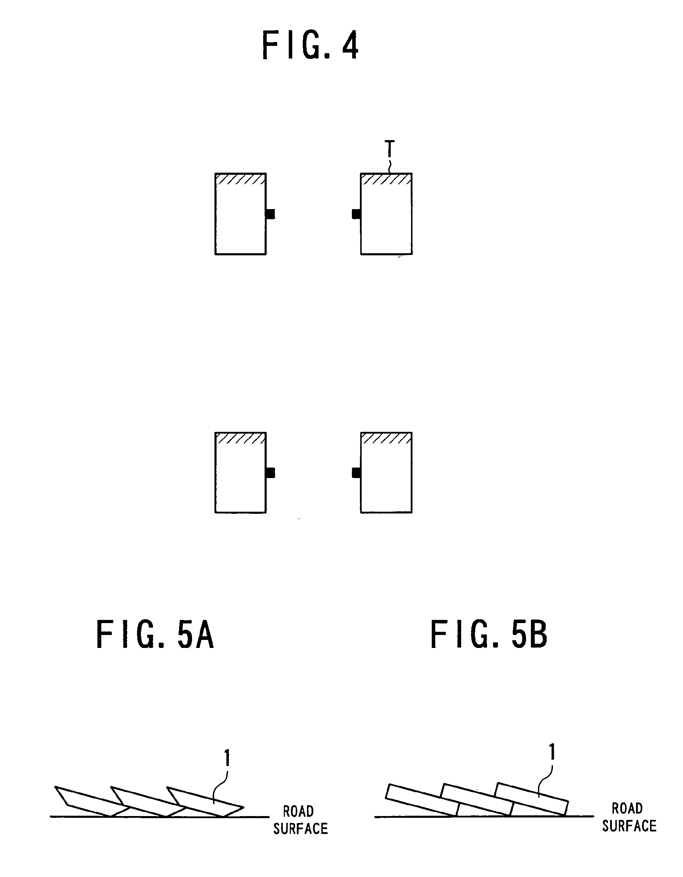

Fig. 4 is a plan view showing an arrangement structure when the pneumatic tires formed as above are mounted on a vehicle.
In this embodiment, the tires are mounted on a vehicle so that the ribbon-like rubber member is helically wound from the inside to the outside at mounting. That is, as shown in the figure, the laminating direction of the ribbon-like rubber member is symmetrical to each other for both the front and rear wheels and the laminating directions of the both are arranged to go from the inside (IN) to the outside (OUT) of the vehicle. By this arrangement, in whichever direction of right or left the large cornering force acts in the tire during high-speed running, the direction of the force becomes a direction to slick down the exposed portion of the laminated ribbon-like rubber member 1, and such a problem does not occur that the laminated ribbon-like rubber is turned up and a crack is generated, which progresses and impairs abrasion resistance of the tire or the like as in the conventional tire.
Here, a gauge (thickness) of the ribbon-like rubber member is preferably 0.5 to 2 mm and its width is 5 to 15 mm. If the gauge is smaller than 0.5 mm, the number of laminating times of the ribbon-like rubber member at molding is increased, which reduce productivity. If it is larger than 2 mm, the steps between the ribbon-like rubber members are increased, which causes a defect in production. Also, when the width is smaller than 5 mm, similarly to small gauges, the number of laminating times of the ribbon-like rubber member is increased, which reduce productivity. If the width is larger than 15 mm, it is difficult to make a complicated target tread gauge.

Next, referring to Fig. 5, a sectional shape of the ribbon-like rubber member will be described. The ribbon sectional shape of a pneumatic tire according to this embodiment is, as shown in Fig. 5A, a shape whose corner part is cut away or removed, that is, a shape in which an end in the width direction on the rectangular section on the upper side when being laminated is tapered so as to reduce the thickness as compared with the center part. Therefore, as a product, the end in the width direction is in a shape whose corner part on the tread face is cut away. Fig. 5B is a section of a conventional ribbon-like rubber member shown for comparison. As obvious from the comparison between the both, the ribbon-like rubber member according to the embodiment can reduce a step between the ribbons at molding, which can restrict crease deficiency in a product. Also, when being mounted on a vehicle, a rise in ground-contacting pressure at a corner part in a ribbon section can be restrained, abrasion is made uniform, and steering stability is improved.
For a tire formed by laminating the conventional rubber strip, the paragraph [0019] in Patent Document 1 describes as the ribbon sectional shape that, various preferable shapes such as those in the trapezoidal shape, having both ends with small thickness in the width direction or the like depending on the finished sectional shape of the member can be employed, but it merely means that the various sectional shapes can be employed for the ribbon sectional shape, considering the finished sectional shape of the member, but does not exert the working effect of the present invention realized by removing a corner portion on the upper side in overlapping winding on the upper face.

### Embodiment

Table 1 shows comparison between an embodiment of the present invention and a conventional tire.
That is, in two tires with the tire size set at 285/30R18 (tire size specified by "JATMA Year Book" in Japan, "Year Book of The Tire and Rim Association Inc. " in the U.S. and "Standards Manual of The European Tire and Rim Technical Organization" in Europe), in which a carcass layer has a cord type of twisted cord, an angle (to circumference) of 0° , and the number of layers as two, a steel bias belt layer has a cord type of twisted cord and an angle (to circumference) of 55° , spiral is polyaramide CAP and a tread is a ribbon helically wound lamination for both but only the laminating directions differ. That is, comparison is made between the embodiment of the present invention, in which lamination is carried out from the inside to the outside for both right and left wheels when being mounted on a vehicle, and the other tire laminated from the outside to the inside for both right and left wheels when being mounted on a vehicle for comparison.

**[Table 1]**

| | Tire of the present invention | Conventional tire |
|---|---|---|
| Carcass layer | | |
| -Cord type | Twisted cord | Twisted cord |
| -Angle (to circumference) | 0° | 0° |
| -Number of layers | Two layers | Two layers |

| Steel bias belt layer | | |
|---|---|---|
| - Cord type | | |
| - Angle (to circumference) | Twisted cord 55° | Twisted cord 55° |
| - Number of layers | Two layers | Two layers |
| - Spiral | Polyaramide CAP | Polyaramide CAP |

| Tread | | |
|---|---|---|
| - Molding method | Ribbon helical winding lamination Inside to outside in vehicle mounting for both right and left wheels | Ribbon helical winding lamination Outside to inside in vehicle mounting for both right and left wheels |
| - Laminating direction | | |

| Invention effect | | |
|---|---|---|
| Number of crack occurrences (index) | 60 | 100 |

The effect of a pneumatic tire according to the present invention is evaluated by the following test:
<Test conditions>
Tester: Drum-type testing machine
Rim size: 10J-18
Air pressure: 310 kPa
Load: 4.0 kN
Camber angle: 0 degree
Slip angle: 4 degrees
Speed: 320 km/h
Time: 80 minutes
A test was conducted to see if a difference was found between the number of crack occurrences by rotating the tire at a high speed under the above conditions with a side force imparted. The numbers of cracks which could be visually confirmed at a distance of 1Mwere compared. Supposing that the number of cracks in the conventional tire was at 100 (index), the number of cracks in the embodiment of the present invention was 60.
As above, the number of crack occurrences is reduced for the embodied tire of the present invention, and thus, it is confirmed that abrasion resistance is improved.

## Claims

1. A pneumatic tire, comprising a tread formed by winding ribbon-like rubber members in a tire circumferential direction in spirals so that the member is partially overlapped in a tire width direction, wherein
the ribbon-like rubber members are wound in spirals when being mounted on a vehicle, from a portion corresponding to the inside thereof toward a portion corresponding to the outside thereof.

2. The pneumatic tire according to claim 1, wherein
the ribbon-like rubber member has a thickness of 0.5 mm to 2 mm and a width of 5 mm to 15 mm.

3. The pneumatic tire according to claim 1 or 2, wherein
an end in a width direction of the ribbon-like rubber member has a thickness smaller than a center part.

4. The pneumatic tire according to claim 3, wherein the end in the width direction is cut away at a corner part of a tread surface.

5. An arrangement structure of a pneumatic tire, comprising a tread formed by winding a ribbon-like rubber member in a tire circumferential direction in spirals so as to be partially overlapped in a width direction, wherein a tire is mounted on a vehicle so that spiral winding of the ribbon-like rubber member is directed from the inside toward the outside when being mounted.

6. A manufacturing method of a pneumatic tire comprising:
a lamination molding process for winding ribbon-like rubber members in a tire circumferential direction in spirals so as to be partially overlapped in a tire width direction;
a process of stitching the ribbon-like rubber members partially overlapped in winding in a direction opposite to the lamination molding direction of the ribbon members after lamination of the ribbon-like rubber members.
